Europäisches Patentamt

European Patent Office

Office européen des brevets

(19)

(11) Numéro de publication: **0 276 596 B1**

## (12) FASCICULE DE BREVET EUROPEEN

(45) Date de publication de fascicule du brevet:
07.08.91

(21) Numéro de dépôt: 87402830.1

(22) Date de dépôt: **11.12.87**

(51) Int. Cl.⁵: **A01B 49/00, A01B 17/00**

(54) **Ensemble charrue tractée réversible et appareil de traitement ou de travail des terres labourées, et procédé de travail de bandes de terre adjacentes à l'aide de cet ensemble.**

(30) Priorité: **17.12.86 FR 8617697**

(43) Date de publication de la demande:
**03.08.88 Bulletin 88/31**

(45) Mention de la délivrance du brevet:
**07.08.91 Bulletin 91/32**

(84) Etats contractants désignés:
**AT BE CH DE ES FR GB GR IT LI LU NL SE**

(56) Documents cités:
**DE-A- 3 207 324**
**DE-U- 8 523 386**
**DE-U- 8 624 526**
**FR-A- 838 255**
**GB-A- 1 155 446**

(73) Titulaire: **GOURDIN-SOUPLEX**
**Saulnières**
**F-28500 Vernouillet(FR)**

(72) Inventeur: **Cromback, Thierry**
**61 boulevard de la Saussaye**
**F-92200 Neuilly sur Seine(FR)**

(74) Mandataire: **Durand, Yves Armand Louis et al**
**Cabinet Z. Weinstein 20, Avenue de Friedland**
**F-75008 Paris(FR)**

Rank Xerox (UK) Business Services

## Description

La présente invention a essentiellement pour objet un ensemble constitué par l'accrochage d'une charrue tractée réversible à un appareil de traitement ou de travail des terres labourées, tel que par exemple un rouleau à disques.

Elle vise également un procédé de travail de bandes de terre adjacentes à l'aide de cet ensemble.

On a déjà proposé sur le marché des charrues tractées comportant sur le côté un bras déporté muni d'un crochet ou analogue pour permettre l'accrochage d'un appareil susceptible de travailler la terre, tel que par exemple un appareil à disques multiples pouvant casser les mottes de terre, comme cela est par exemple décrit dans le document DE-U-8.523.386. En d'autres termes, l'appareil est déporté par rapport à la charrue et agit par conséquent sur la bande de terre précédemment labourée tandis que la charrue laboure simultanément une bande de terre adjacente.

Mais un tel attelage présente un certain nombre d'inconvénients parmi lesquels on peut citer :

L'obligation de prévoir un passage supplémentaire sur la dernière bande précédemment labourée du champ;

La nécessité d'une manoeuvre délicate dans le cas où la bande précédemment labourée comporte un obstacle qui devra être évité ou contourné par l'appareil déporté et tracté par la charrue ;

Le collage de la terre sur les outils de l'appareil qui peut être par exemple un rouleau à disques, en raison du fait que l'appareil ne travaille pas la terre immédiatement après le labour, de sorte que, en cas de pluie, la bande de terre précédemment labourée absorbe la pluie et, au passage suivant, la terre vient s'agglomérer sur les outils de l'appareil;

L'impossibilité de travailler avec l'appareil la fin de la bande de terre précédemment labourée et le début de la bande de terre à labourer, étant donné que l'appareil est relié à la charrue par un bras rigide et ne peut être attelé que lorsque la charrue est en terre ; et

Un effort de traction en porte à faux sur l'appareil ce qui, comme on comprend, est nuisible à l'équilibre du tracteur muni de sa charrue.

La présente invention a pour but de remédier à tous les inconvénients ci-dessus en proposant un attelage particulièrement simple et judicieux qui permet aux appareils tractés par une charrue de traiter ou de travailler la terre immédiatement après l'opération de labour et dans l'axe de la bande de terre labourée, étant entendu que cet attelage peut fonctionner d'une manière automatique pour assurer l'accrochage ou le décrochage de l'appareil qui, en outre, pourra traiter ou travailler la terre jusqu'aux extrémités de la bande labourée et cela sans difficultés particulières ni manoeuvres compliquées.

A cet effet, l'invention a pour objet un ensemble charrue tractée réversible et appareil de traitement ou de travail des terres labourées, tel que par exemple un rouleau à disques, comprenant un bras solidaire de la charrue et pourvu à son extrémité d'un crochet ou analogue qui peut être accroché à ou décroché d'un élément formant timon solidaire de l'appareil, ledit bras étant articulé à la charrue suivant un axe sensiblement vertical pour coopérer avec le timon, caractérisé en ce que ledit timon est articulé sur l'appareil suivant un axe sensiblement horizontal, ledit bras étant rappelé en direction de la charrue et un lien étant prévu pour limiter la course de débattement du bras suivant un angle tel que l'appareil tracté par la charrue est maintenu dans l'axe de la bande labourée par celle-ci et peut s'accrocher à ou se décrocher automatiquement de ladite charrue.

Selon une autre caractéristique de l'invention, le bras est constamment rappelé en direction de la charrue par un ressort, tandis que le lien précité est constitué par une chaîne.

Suivant encore une autre caractéristique du dispositif de l'invention, le timon articulé sur l'appareil est constitué par un cadre présentant par exemple une forme de U ou de V articulé suivant l'axe horizontal précité à l'une et l'autre extrémités de l'appareil.

On précisera encore ici qu'au moins un ressort est monté entre le cadre précité et le bâti de l'appareil pour solliciter de façon permanente ce cadre en position relevée.

On comprend donc déjà que grâce à l'articulation du bras sur la charrue et du timon sur l'appareil et que, grâce aux moyens de rappel précités, l'appareil pourra travailler la terre dans l'axe de la charrue et les manoeuvres d'accrochage et de décrochage de cet appareil pourront s'effectuer automatiquement, ce qui procurera un gain de temps et un meilleur rendement.

L'invention vise également un procédé de travail de bandes de terre adjacentes à l'aide d'un ensemble constitué par un tracteur avec charrue réversible et un appareil de traitement ou de travail des bandes de terre labourées, caractérisé en ce qu'il consiste:

A tracter l'appareil de traitement, pendant le labour d'une bande de terre, dans la trajectoire suivie par la charrue réversible de façon que ledit appareil travaille la bande de terre immédiatement après le labour de cette bande,

A désaccoupler automatiquement l'appareil de traitement de la charrue réversible après que ledit appareil soit parvenu au-delà de l'extrémité de la bande de terre labourée et travaillée, et

A faire subir un demi-tour au tracteur à charrue associée réversible pour qu'il saisisse, lorsqu'il parvient sur la bande de terre adjacente suivante, l'appareil suiveur de traitement par son autre extrémité, et tracte cet appareil dans la trajectoire de roulement du tracteur à charrue associée, de façon à effectuer de nouveau le labour et le travail de ladite bande adjacente suivant ladite trajectoire.

Mais d'autres avantages et caractéristiques de l'invention apparaîtront mieux dans la description détaillée qui suit et se réfère aux dessins annexés, donnés uniquement à titre d'exemple, et dans lesquels:

La figure 1 est une vue schématique et en plan de dessus d'une charrue tractée à laquelle est accroché un appareil à l'aide des moyens d'attelage conformes à l'invention;

La figure 2 est une vue schématique et en perspective des moyens réalisant l'accrochage de la charrue à l'appareil; et

La figure 3 est une vue en plan de dessus similaire à la figure 1, mais illustrant la manoeuvre de décrochage et d'accrochage de l'appareil à la charrue.

En se reportant aux figures, on voit un tracteur 1 qui est muni d'une charrue réversible 2 dont on a représenté schématiquement les socs en 3, laquelle charrue peut être attelée, par l'intermédiaire d'un dispositif conforme à l'invention, à un appareil 4 de traitement ou de travail des terres labourées, tel que par exemple un rouleau comportant une multiplicité de disques 5.

La charrue 2 est munie d'un bâti 6 de liaison de l'appareil 4 à ladite charrue, ce bâti étant par exemple constitué par trois fers 6a, 6b et 6c constituant un cadre fixé en 7 sur la charrue.

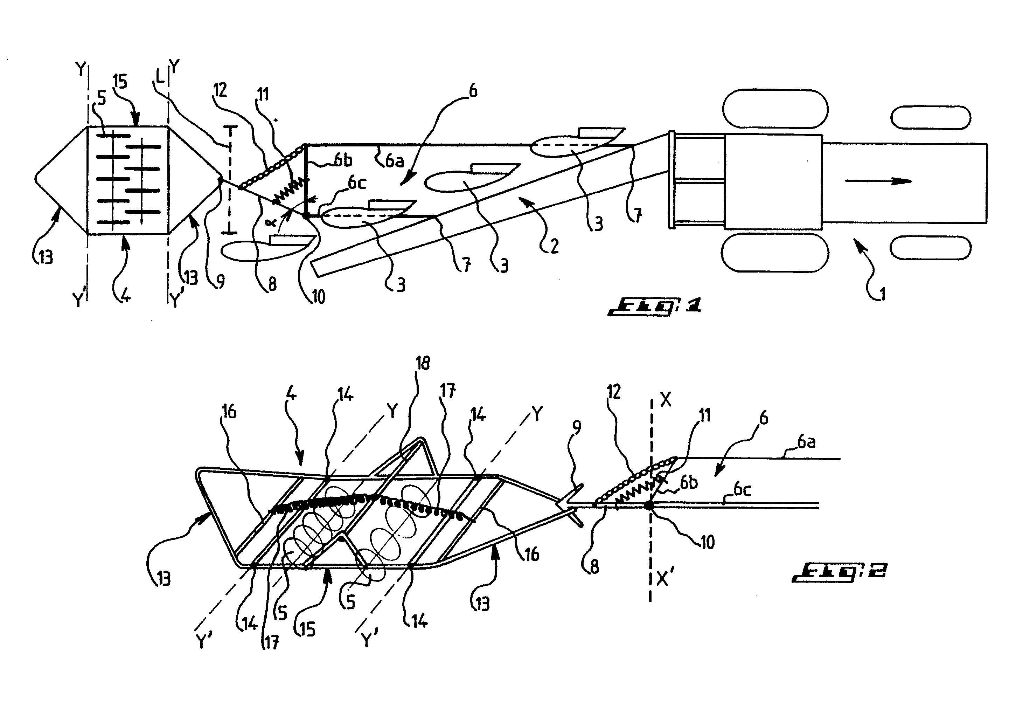

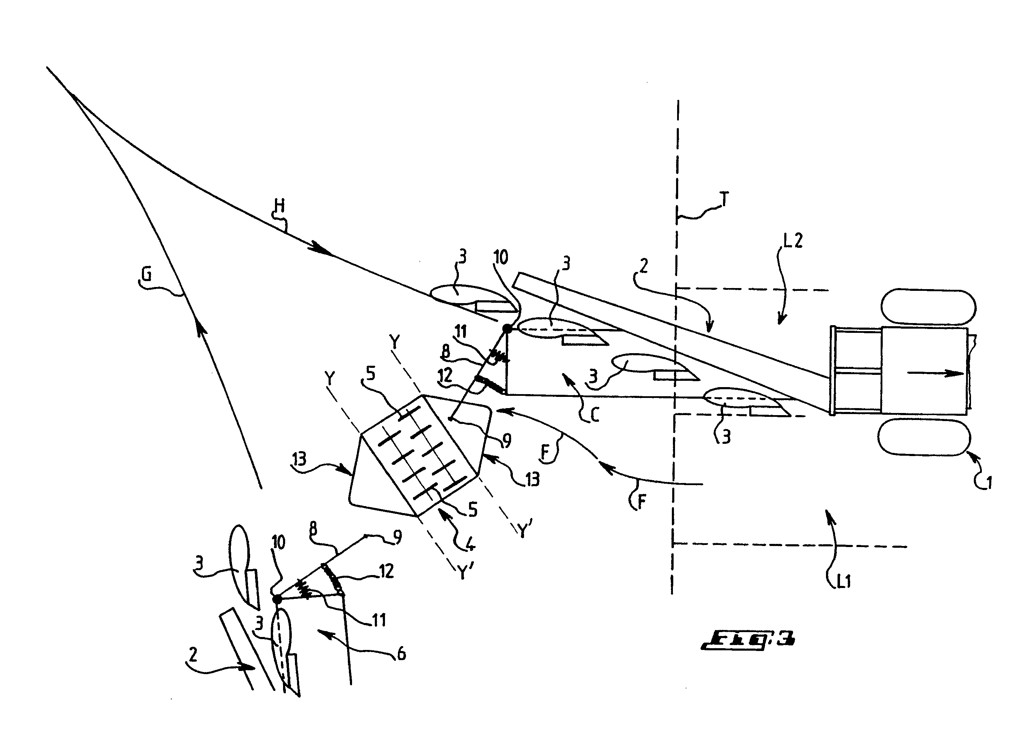

Sur le bâti 6 est articulé par une extrémité 10 et suivant un axe sensiblement vertical X-X', un bras 8 qui porte à son autre extrémité un crochet en forme d'ancre 9 bien visible sur la figure 2. Ainsi, comme on le comprend, le bras 8 peut pivoter autour de l'axe X-X' dans le plan du bâti 6.

Un ressort 11, travaillant en traction et fixé entre le fer ou montant 6b du bâti 6 et le bras 8, rappelle constamment ce bras en direction du bâti 6 et donc de la charrue 2.

Un lien souple, tel que par exemple une chaîne 12, est fixé par ses extrémités entre le bras 8 et le bâti 6, comme on le voit bien sur les figures. Cette chaîne 12 limite par conséquent la course de débattement du bras 8 suivant un angle tel que l'appareil 4 tracté par la charrue 2 est maintenu dans l'axe de la bande L (figure 1) labourée par ladite charrue.

L'appareil 4 est muni à ses deux extrémités d'un timon 13 qui, comme on le voit mieux sur la figure 2, est articulé sur l'appareil suivant un axe sensiblement horizontal Y-Y'.

Suivant l'exemple représenté, chaque timon 13 est constitué par un cadre présentant une forme de V articulé, par ses deux extrémités 14 suivant l'axe Y-Y', sur le châssis 15 de l'appareil 4 constituant ici un rouleau à disques 5. Il est à noter que l'appareil 4 pourrait être tout autre qu'un rouleau à disques et constituer par exemple un semoir, sans sortir du cadre de l'invention. On a montré en 16 sur la figure 2 une entretoise ou analogue servant à rigidifier le V constituant chaque timon 13.

Un ressort 17, travaillant en traction, est monté par ses extrémités entre l'entretoise 16 et une partie appropriée du bâti 15, à savoir par exemple une barre transversale 18 solidaire dudit bâti.

Les ressorts 17 sollicitent en permanence les timons 13 en position relevée et, bien entendu, ils pourraient être fixés entre le timon 13 et le bâti 15 de l'appareil sur des parties autres que l'entretoise 16 et la barre 18, sans pour cela sortir du cadre de l'invention.

Mais on expliquera maintenant en détail le fonctionnement des moyens qui viennent d'être décrits en se reportant plus particulièrement à la figure 3.

Sur cette figure, on a montré en T une limite de la surface ou du champ à labourer, en $L_1$ une bande de terre qui vient d'être labourée par la charrue 2 et traitée par l'appareil 4, et en $L_2$ une bande de terre adjacente en début de labour.

La bande de terre $L_1$ est labourée et les mottes de terre sont cassées par l'appareil ou rouleau 4 immédiatement après labourage, puisque ledit rouleau est dans l'axe de la charrue 2 et donc de la bande $L_1$. En fin de bande, on soulève la charrue 2 qui reste néanmoins accrochée au timon 13 du rouleau 4 par l'ancre 9. Il est à noter ici que l'ancre 9, grâce à la valeur de l'angle et de l'effort de traction, maintient le timon 13 suivant une position plus élevée que celle procurée par la traction du ressort 17.

Ainsi, la charrue 2 étant relevée, il n'y a plus de labourage, mais le rouleau 4 termine le cassage des mottes sur la fin de la bande labourée $L_1$.

Puis l'attelage charrue 2 - rouleau 4 suit le trajet des flèches F jusqu'à ce que le rouleau 4 soit dans la position représentée sur la figure 3.

Le tracteur 1 et sa charrue associée 2 s'arrêtent, et le timon 13, sous l'effet de la gravité et de l'effort de traction qui devient nul, se décroche de l'ancre 9 puisque, comme on l'a expliqué précédemment, le timon 13, lorsqu'il était accroché à l'ancre, se trouvait dans une position plus élevée que celle normalement conférée par la traction du ressort 17. Il faut encore noter ici qu'après décrochage, le bras 8 articulé sur le bâti 6 est rappelé, grâce au ressort 11, vers ce bâti et la charrue 2.

Ensuite, le tracteur et sa charrue associée reculent suivant la flèche G et avancent à nouveau suivant la flèche H, étant entendu que, pendant ce trajet, la charrue 2 est retournée, de sorte que l'ancre 9 se trouve rabattue du côté de la bande L₁ précédemment labourée, comme on le voit bien sur la figure 3 en fin du trajet H.

Ainsi, comme on le voit bien sur la figure 3, en abaissant la charrue 2, le bras 8 va s'abaisser et l'ancre 9 s'accrocher dans le timon 13 à l'autre extrémité du rouleau 4, lequel timon va s'abaisser sensiblement à l'horizontale, à l'encontre de la force de traction du ressort 17, comme on le voit sur la figure 2.

Puis le labourage de la bande L₂ va commencer et, sous l'effet de l'effort de traction de la charrue 2, le rouleau 4 va se placer automatiquement dans l'axe de la charrue 2 et de la bande L₂, et cela grâce au bras 8 dont l'angle de débattement est limité par la chaîne 12, comme on le voit bien sur la figure 1. Il en résulte que les mottes de terre pourront être cassées en tout début de la bande L₂ et juste après le labourage, ce qui n'était pas le cas avec les systèmes antérieurs.

On a donc réalisé suivant l'invention un dispositif d'accrochage d'un appareil à une charrue tractée qui permet le travail des bordures des champs, le franchissement d'un obstacle sans décrochage, le travail de la terre labourée par temps de pluie, en évitant les bourrages, le travail de la terre précédemment labourée en tout début et en fin de bande labourée, et l'application d'un effort de traction sur l'appareil qui est centré et ne nuit pas à l'équilibre du tracteur portant la charrue.

En outre, un tel dispositif demeure d'une conception peu coûteuse et particulièrement simple, sans la nécessité d'utiliser un système hydraulique quelconque puisque l'accrochage et le décrochage de l'appareil seront tout simplement commandés par l'actionnement de la charrue.

Bien entendu, l'invention n'est nullement limitée au mode de réalisation décrit et illustré qui n'a été donné qu'à titre d'exemple.

C'est ainsi que la réalisation du bâti de liaison de la charrue à l'appareil ou la fixation de la chaîne reliant le bras pivotant à ce bâti peuvent être quelconques sans sortir du cadre de l'invention. Egalement un vérin pourrait être utilisé pour jouer le rôle du ressort 11 et du lien 12.

**Revendications**

1.  Ensemble charrue (2) tractée réversible et appareil (4) de traitement ou de travail des terres labourées, tel que par exemple un rouleau à disques, comprenant un bras (8) solidaire de la charrue (2) et pourvu à son extrémité d'un crochet ou analogue (9) qui peut être accroché à ou décroché d'un élément formant timon (13) solidaire de l'appareil (4), ledit bras (8) étant articulé à la charrue (2) suivant un axe (10) sensiblement vertical (X-X') pour coopérer avec le timon (13), caractérisé en ce que ledit timon (13) est articulé sur l'appareil suivant un axe (14) sensiblement horizontal (Y-Y'), ledit bras étant rappelé en direction de la charrue et un lien (12) étant prévu pour limiter la course de débattement du bras (8) suivant un angle (∝) tel que l'appareil tracté par la charrue est maintenu dans l'axe de la bande (L) labourée par celle-ci et peut s'accrocher à ou se décrocher automatiquement de ladite charrue.

2.  Ensemble suivant la revendication 1, caractérisé en ce que le bras est constamment rappelé en direction de la charrue par un ressort (11), tandis que le lien précité (12) est constitué par une chaîne.

3.  Ensemble selon la revendication 1 ou 2, caractérisé en ce que le timon précité (13) est constitué par un cadre présentant par exemple une forme de U ou de V articulé suivant l'axe horizontal précité (Y-Y') à l'une et l'autre extrémités de l'appareil (4).

4.  Ensemble selon la revendication 3, caractérisé par au moins un ressort (17) monté entre le cadre et le bâti (15) de l'appareil (4) pour solliciter de façon permanente ledit cadre en position relevée.

5.  Procédé de travail de bandes de terre adjacentes à l'aide d'un ensemble suivant l'une des revendications 1 à 4 et constitué par un tracteur avec charrue réversible et un appareil de traitement ou de travail des bandes de terre labourées, caractérisé en ce qu'il consiste:

    A tracter l'appareil de traitement, pendant le labour d'une bande de terre, dans la trajectoire suivie par la charrue réversible de façon que ledit appareil travaille la bande de terre immédiatement après le labour de cette bande.

    A désaccoupler automatiquement l'appareil de traitement de la charrue réversible après que ledit appareil soit parvenu au-delà de l'extrémité de la bande de terre labourée et travaillée, et

    A faire subir un demi-tour au tracteur à charrue associée réversible pour qu'il saisisse, lorsqu'il parvient sur la bande de terre adjacente suivante, l'appareil suiveur de traitement par son autre extrémité, et tracte cet appareil dans la trajectoire de roulement du tracteur à charrue associée, de façon à effectuer de nouveau le labour et le travail de ladite bande adjacente suivant ladite trajectoire.

## Claims

1. Combination of a tractor-drawn reversible plough (2) and of an implement (4) for the treatment or working of tilled land, such for instance as a disc roller, comprising an arm (8) made fast to the plough (2) and provided at its end with a hook or the like (9) which may be hooked on or unhooked from a beam element (13) made fast to the implement (4), the said arm (8) being pivotally connected to the plough (2) along a substantially vertical (X-X') axis (10) to co-operate with the beam (13), characterized in that the said beam (13) is pivotally connected to the implement about a substantially horizontal (Y-Y') axis (14), the said arm being drawn back in the direction of the plough and a tie (12) being provided to limit the displacement stroke of the arm (8) according to an angle (α) such that the implement trailed by the plough is maintained in the axis of the stretch (L) tilled by the latter and may be hooked to or automatically unhooked itself from the said plough.

2. Combination according to claim 1, characterized in that the arm is constantly urged back in the direction of the plough by a spring (11), whereas the aforesaid tie (12) consists of a chain.

3. Combination according to claim 1 or 2, chararacterized in that the aforesaid beam (13) consists of a frame exhibiting for instance the shape of a U or of a V pivotally connected about the aforesaid horizontal axis (Y-Y') to either ends of the implement (4).

4. Combination according to claim 3, characterized by at least one spring (17) mounted between the frame and the body (15) of the implement (4) to permanantly urge the said frame towards the raised position.

5. Method for working adjacent stretches of land by means of a combination according to one of claims 1 to 4 and consisting of a tractor with a reversible plough and an implement for treating or working tilled stretches of land, characterized in that it consists:

In drawing the treatment implement during the ploughing of a stretch of land in the path of travel followed by reversible plough so that the said implement works the stretch of land immediately after the tilling of this stretch:

Automatically disconnecting the treating implement from the reversible plough after the said implement has gone beyond the end of the tilled and worked stretch of land, and

Subjecting the tractor with the associated reversible plough to a half-turn in order that it grips when reaching the following adjacent stretch of land the follower treating implement by its other end, and drawing this implement in the path of riding of the tractor with the associated plough so as to carry out again the tilling and the working of the said adjacent stretch along the said path of travel.

## Patentansprüche

1. Anordnung eines geschleppten Drehpflugs (2) und eines Geräts (4) zur Behandlung oder Bearbeitung von gepflügtem Land, wie zum Beispiel einer Wellenwalze, mit einem mit dem Pflug (2) verbundenen Arm (8), der an seinem Ende mit einem Haken oder dergleichen (9) versehen ist, der an einem einen Zugbaum bildenden, mit dem Gerät (4) verbundenen Element (13) angehakt und von diesem losgehakt werden kann, wobei der besagte Arm (8) an dem Pflug (2) um eine etwa senkrechte (X-X') Achse (10) herum angelenkt ist, um mit dem Zugbaum (13) zusammenzuwirken, dadurch gekennzeichnet, dass der besagte Zugbaum (13) an dem Gerät um eine etwa waagerechte (Y-Y') Achse (14) angelenkt ist, wobei der besagte Arm in Richtung auf den Pflug hin rückstellmässig beaufschlagt wird und ein Verbindungsglied (12) vorgesehen ist, um den Ausschlagweg des Armes (8) gemäss einem solchen Winkel (∝) zu beschränken, dass das von dem Pflug geschleppte Gerät in der Achse des von diesem gepflügten Landstreifens (L) gehalten wird und sich selbsttätig an dem besagten Pflug anhaken bzw. von diesem loshaken kann.

2. Anordnung gemäss Anspruch 1, dadurch gekennzeichnet, dass der Arm ständig in Richtung auf den Pflug hin durch eine Feder (11) rückstellmässig beaufschlagt wird, während das vorgenannte Verbindungsglied (12) durch eine Kette gebildet wird.

3. Anordnung nach Anspruch 1 oder 2, dadurch gekennzeichnet, dass der vorgenannte Zugbaum (13) durch einen z.B. eine U- oder V-förmige Gestalt aufweisenden an dem einen und dem anderen Ende des Gerätes (4) um die vorgenannte waagerechte Achse (Y-Y') herum angelenkten Rahmen gebildet ist.

4. Anordnung nach Anspruch 3, gekennzeichnet durch wenigstens eine zwischen dem Rahmen und dem Gestell (15) des Gerätes (4) eingebaute Feder (17), um den besagten Rahmen ständig zur hochgeschwenkten Lage hin zu beaufschlagen.

5. Verfahren zur Bearbeitung von nebeneinanderliegenden Landstreifen mit Hilfe einer Anordnung gemäss einem der Ansprüche 1 - 4, welche aus einem Schlepper mit einem Drehpflug und einem Gerät zur Behandlung oder Bearbeitung von gepflügten Landstreifen besteht, dadurch gekennzeichnet, dass es darin besteht:

das Behandlungsgerät während dem Pflügen eines Landstreifens entlang der von dem Drehpflug gefolgten Laufbahn zu schleppen, so dass das besagte Gerät den Landstreifen unmittelbar nach dem Pflügen dieses Streifens bearbeitet;

das Behandlungsgerät automatisch von dem Drehpflug zu entkoppeln nachdem das besagte Gerät über das Ende des gepflügten und bearbeiteten Landstreifens hinaus gelangt ist, und

den Schlepper mit zugeordnetem Drehpflug einer Kehrtwendung zu unterwerfen, damit er, wenn er auf den nachfolgenden anschliessenden Landstreifen gelangt, das folgende Behandlungsgerät an seinem anderen Ende erfasst und dieses Gerät entlang der Laufbahn des Schleppers mit zugeordnetem Pflug schleppt, um von neuem das Pflügen und die Bearbeitung des besagten angrenzenden Streifens entlang der besagten Laufbahn durchzuführen.

Fig.1

Fig.2

Fig.3

EP 0 276 596 B1